# EUROPEAN PATENT APPLICATION

(11) **EP 0 718 074 A1**
(43) Date of publication of application: **26.06.1996**
(21) Application number: 95830531.0
(22) Date of filing: 21.12.1995
(51) Int. Cl.: B23Q 1/01, B23Q 1/03, B23Q 7/03, B23Q 16/00, B27C 3/06, B23B 39/16, B23Q 11/00

(54) **A wood machining centre**

(30) Priority: 23.12.1994 IT BO940575
(71) Applicant: MORBIDELLI S.p.A., I-61100 Pesaro (IT)
(72) Inventor: Sacchi, Paride, I-47037 Rimini (IT)
(74) Representative: Lanzoni, Luciano

(57) **Abstract**

The work table (3) of the wood machining centre is inclined in relation to the horizontal surface (P) supporting the bed (2) and incorporates a locating element (29) positioned near to the bottom edge (3a), projecting above the surface of the table (3), that functions both as a stop and as a point of reference for numerical control purposes; the workpiece (1) is supported and positioned by a horizontal fence and conveyor assembly (7s, 7) extending along the bottom edge (3a) of the table (3) and can be translated along the "X" axis in either direction, according to the machining operations performed. A single machining unit (4), coinciding with the "Y" axis and carried by a beam (10) mounted rigidly to the bed (2) directly above the work table (3), is equipped with face boring tools (8) operating on a third axis (Z), perpendicular to the table (3), and edge boring tools (9) operating parallel with the "X" axis. The various movements of the machining unit (4) and the conveyor (7) along the two axes are piloted by a single control unit (11) on the basis of the machining steps programmed for the workpiece (1).

## Description

The present invention relates to a machining centre for wood, in particular for boring and routing pieces fashioned from wood and its derivatives.

Machining centres for boring operations fall currently into a variety of categories classifiable principally according to the level of output per unit of time that the equipment is designed to deliver: borers affording a high output potential include those of the so-called "point-to-point" type, or "transfer" machines, which are capable of turning out large batches of work in a relatively short space of time, but on the other hand are both costly and cumbersome; in addition to these, there are machining centres typified by size and cost criteria more in line with the effective requirements of jobbing craftsmen or small businesses producing furniture.

It is this second category of machining centres with which the present specification is chiefly concerned: machines generally of smaller dimensions such as can be utilized to carry out the greater part of boring operations performed by bigger machining centres; and whilst the overall operating times may be longer, the size and the cost of the machines in question will be less than in the case of the types first mentioned.

Borers are used by makers of modular furniture for the purpose of sinking dowel and screw holes in components such as panels, doors and shelves, likewise sockets to accept hardware, and other boring operations required for subsequent assembly.

A first solution for machining centres of this general type comprises a load-bearing frame supporting a fixed horizontal work table on which pieces are positioned and secured by relative clamps located directly above.

Holes are made by a boring unit mounted adjacent to the table and consisting in a set of spindle heads carried by a power driven superstructure such as can be rotated through approximately one right angle about a "virtual" fulcrum coinciding substantially with the innermost end of the work table.

With this arrangement, holes can be made if necessary both in the two larger faces of a workpiece positioned on the table (vertically), and in the end or side edge nearer the fulcrum about which the boring unit rotates (horizontally), thereby ensuring that the holes made in two separate pieces destined for assembly as the adjoining sides of a unit of furniture will be located in identical positions.

This type of machining centre represents a reasonable compromise between an automatic machine and a purely manual machine, but is limited inasmuch as it cannot be exploited for other incidental operations typically required in the preparation of furniture components (routing, or the sinking of different diameter holes to accept hinges, etc.); such machines consequently do not provide that flexibility of operation which in the present trading climate is a basic necessity for the small manufacturer.

In another solution for wood machining centres of the type in question, the work is again positioned on a horizontal table in this instance with two machining stations, of which the first consists in a vertical axis turret located above the table, adjustable for position manually along the transverse or "Y" axis of the machine and affording a plurality of functions (single and multiple vertical bore, routing, fitment of hinges, etc.); the second machining station is located alongside the work table and consists in a plurality of fixed position horizontal axis spindles by which the work can be bored horizontally.

A machine structured after this fashion is programmed manually by the operator utilizing two cylinders of polygonal section which define the X and Y axes of the machine (one extending parallel with the table, the other parallel with the turret). In effect, each facet of the cylinder affords a slide way of given colour accommodating a stop against which to locate the work, in the case of the X axis, or a yoke by means of which to anchor the turret in the case of the Y axis, both positioned by the operator at the outset according to the dimensions of the workpiece and to the type of machining operations it must undergo.

Each operation performed on the piece thus corresponds to one facet of each cylinder, so that every time the cylinders are indexed, different combinations of stops come into play for the work and for the turret. The colours provide the operator with an immediate visual indication that both stops are positioned correctly on the respective axes.

This machining centre undoubtedly displays a greater operational flexibility than that first mentioned, though at a cost, as more time is required to set up the equipment (the procedures are especially long and laborious) and machining operations and changeovers are similarly prolonged; moreover, these are entirely manual procedures carried out by the operator at some personal risk, since parts of the body are brought repeatedly within the operating compass of the tools.

A further drawback with this machining centre stems from the difficulty in achieving an accurate alignment between vertical and horizontal holes made in separate pieces to be jointed with dowels, inasmuch as the two boring operations are performed at different stations (turret and lateral) and it is therefore not always a certainty that the one set of sockets will coincide exactly with the other when the pieces are assembled ultimately with the dowels.

Accordingly, the object of the present invention is to overcome the various drawbacks mentioned above through the adoption of a wood machining centre for boring operations that can be programmed automatically and will afford superior levels of operational flexibility in the handling and machining of workpieces, as well as conspicuous precision in the preparation of sockets to receive jointing dowels, but nonetheless features extremely low costs and compact dimensions overall.

The invention will now be described in detail, by way of example, with the aid of the accompanying drawings, in which:
- fig 1 illustrates a wood machining centre for boring operations according to the present invention, viewed from the front and in perspective;
- fig 2 illustrates a machining unit of the centre as shown in fig 1, viewed in plan from above with certain parts omitted better to reveal others;
- fig 3 illustrates a part of the machining unit as in fig 2, viewed in a side elevation with certain parts omitted better to reveal others;
- fig 4 illustrates an enlarged detail of the part of the machining unit shown in fig 3, viewed in a section through IV-IV;
- fig 5 illustrates a further aspect of the machining centre, and in particular means by which a piece for machining is positioned on a work table, viewed in a front elevation;
- fig 6 illustrates an alternative embodiment of the positioning means shown in fig 5, enlarged and viewed in a front elevation with certain parts omitted better to reveal others;
- fig 7 illustrates a joint made between two pieces prepared on the wood machining centre according to the invention, viewed in detail and partly in section.

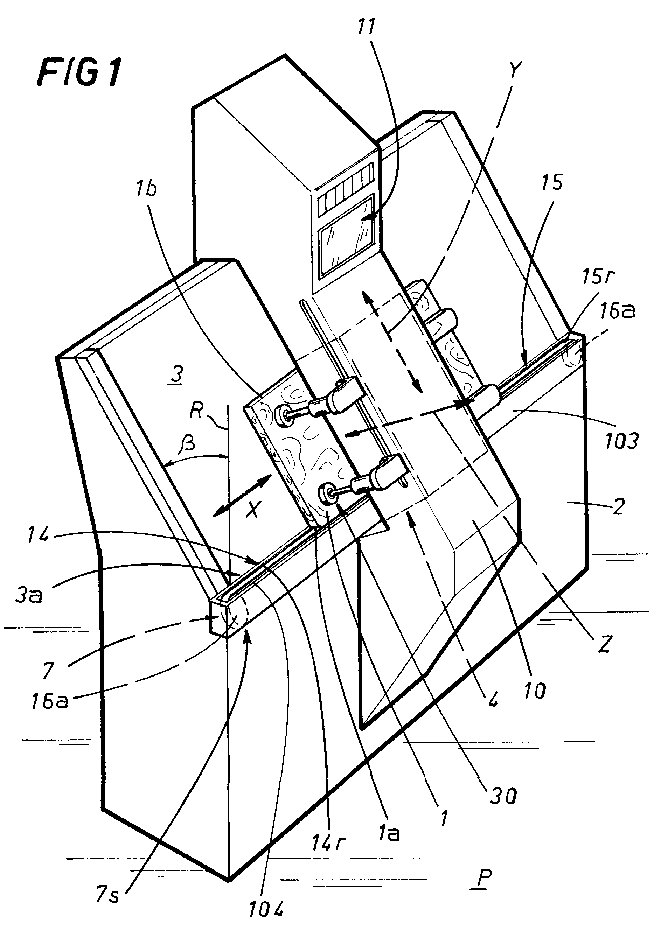

With reference to the accompanying drawings, and in particular to fig 1, the machining centre to which the present invention relates is designed for boring wood prepared as workpieces 1, in small batches, or even individual sample items, destined typically to provide component parts for modular furniture.

The machining centre comprises a bed 2 standing on a horizontal plane P of reference and affording a work table 3 that occupies a plane coinciding with two main axes, respectively longitudinal X and transverse Y; a workpiece 1 supported on the table 3 is addressed by a machining unit 4 capable of movement and adjustable for position close to the table 3.

There are certain essential features exhibited by the machining centre disclosed, namely:
- that the work table 3 is inclined in relation to the reference plane P, toward the vertical, and affords a projecting stop and reference element 29 functioning in practice as a point of origin to which machining steps on the workpiece 1 are referred;
- that it comprises means 7s and 7 by which to support and position the workpiece 1 on the table 3;
- that the machining unit 4 extends and is adjustable for position along the transverse axis Y of the work table 3; and,
- that it comprises control means 11 piloting the operation and adjustment of the machining unit 4 and the supporting and positioning means 7s and 7.

In greater detail, and beginning with the first of the features listed above (still referring to fig 1), the work table 3 is inclined at a given angle β in relation to a straight line R rising perpendicularly from the horizontal reference plane P on which the bed 2 has its stance, whilst the projecting stop and reference element 29 (of which more will be said in due course) is located near to the bottom edge 3a of the table.

The supporting and positioning means 7s and 7 operate in direct contact with the workpiece 1, which can thus be translated across the work table 3, while resting thereon, parallel with the longitudinal axis X (see arrow X) and in either direction according to the type of machining operation to be performed.

More exactly (see figs 1, 5 and 6), the workpiece 1 is positioned by means 7 comprising two belts 14 and 15 disposed in tandem, each looped around a corresponding pair of pulleys 16a and 16b of which at least one is coupled to a geared motor 16m and thus power driven.

In particular, the active branches 14r and 15r of the belts 14 and 15 occupy a common plane so as to create a single surface coinciding with the aforementioned bottom edge 3a of the table 3, on which one edge 1a of the workpiece 1 is caused to rest and along which the piece can be conveyed parallel with the longitudinal axis X in either direction.

To render the conveying movement of the workpiece 1 more secure, the machining centre further comprises restraint means 100 disposed facing the belts 14 and 15 and operating in conjunction with the positioning means 7; such means 100 are capable of reciprocating movement along the transverse axis Y and designed to interact with the edge 1b of the workpiece 1 opposite to that resting on the belts 14 and 15 when the piece is in movement along the longitudinal axis X. In the example illustrated, the restraint means 100 appear as a horizontal rolling fence 105 mounted to an arm 106 reciprocated by an actuator 106p occupying a central slot 102 afforded by the work table 3 and extending in the direction of the transverse axis Y.

The positioning means 7 are accommodated internally of a fixed horizontal fence 103 that coincides with the bottom edge 3a of the work table 3 and constitutes the aforementioned means 7s by which the workpiece 1 is supported. The top face of the horizontal fence 103 affords a longitudinal opening 104 through which the active branches 14r and 15r of the belts 14 and 15 are able to make contact with the bottom edge 1a of the workpiece 1 resting on the fence 103.

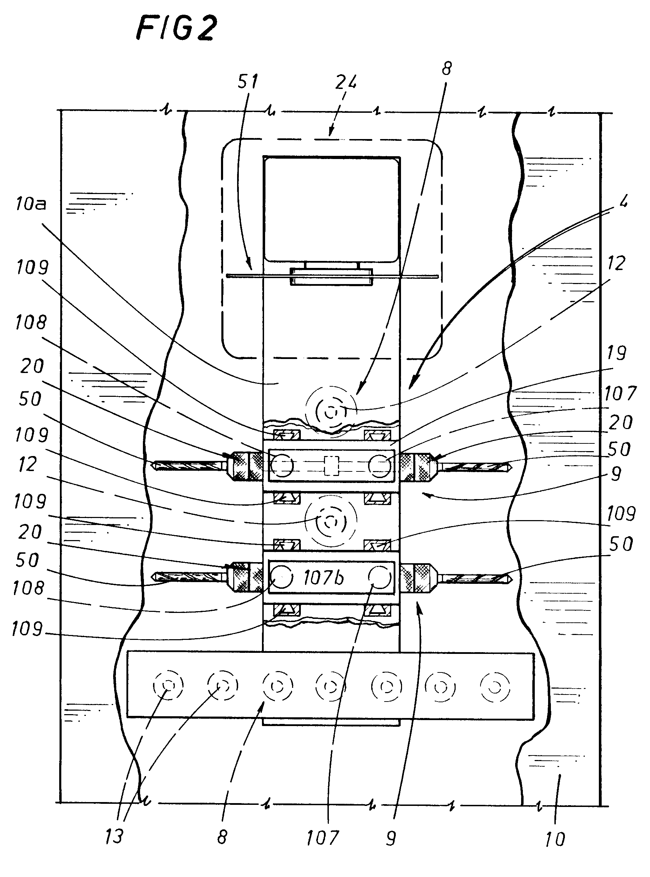

Referring now to the machining unit 4 (see figs 2, 3 and 4), this extends along the transverse axis Y and comprises first or face boring units 8 positioned to engage the work along a relative axis Z perpendicular to the work table 3 (a vertical axis, for practical purposes), and second or edge boring units 9 engaging the work in a direction parallel to the longitudinal axis X. Both units 8 and 9 are incorporated into a first beam 10a capable of movement internally of and supported by a second beam 10 rigidly associated with the bed 2, mounted above and facing the work table 3, and embodied in such a manner that the entire unit 4 can be positioned along the transverse axis Y (sliding on a set of ways not illustrated in the drawing).

As to the single units (still referring to figs 2, 3 and 4), the face boring units 8 comprise a first set of power driven spindles denoted 12, ordered along the transverse axis Y, and a second set of power driven spindles 13 ordered along the longitudinal axis X in crossover formation with the first set of spindles 12; each spindle 12 and 13 serves to perform a particular type of operation on the workpiece 1 (through holes, blind assembly holes, hinge anchor holes, etc.), and is rendered independently capable of movement parallel with the perpendicular axis Z through the agency of a respective sleeve C set into the first beam 10a and supporting a relative pneumatic piston Ps, by which the spindle 12 or 13 is reciprocated. The edge boring unit 9 consists in a plurality of distinct sub-units, arranged in alternation with the spindles of the face boring units 8, each one of which exhibits a turret 19 carrying at least two mutually opposed spindles 20 and capable of traversing along the perpendicular axis Z toward and away from the first beam 10a, so that the spindles 20 can be positioned in relation to the work table 3. The movement along the perpendicular axis Z might be generated by a pair of pneumatic pistons 107 and 108 associated with each turret 19, which would be harnessed both one to another, by way of a bar 107b, and as one to the beam 10a (an arrangement discernible clearly in fig 2); the movement of the turret 19 is guided by means of slide ways 109 interconnecting the turret 19 and the beam 10a. The positional movement of the turrets 19 produced with the pistons 107 and 108 in this way is piloted directly by the aforementioned control means 11, whereas the movement of the various face boring spindles 12 and 13 can also be controlled manually.

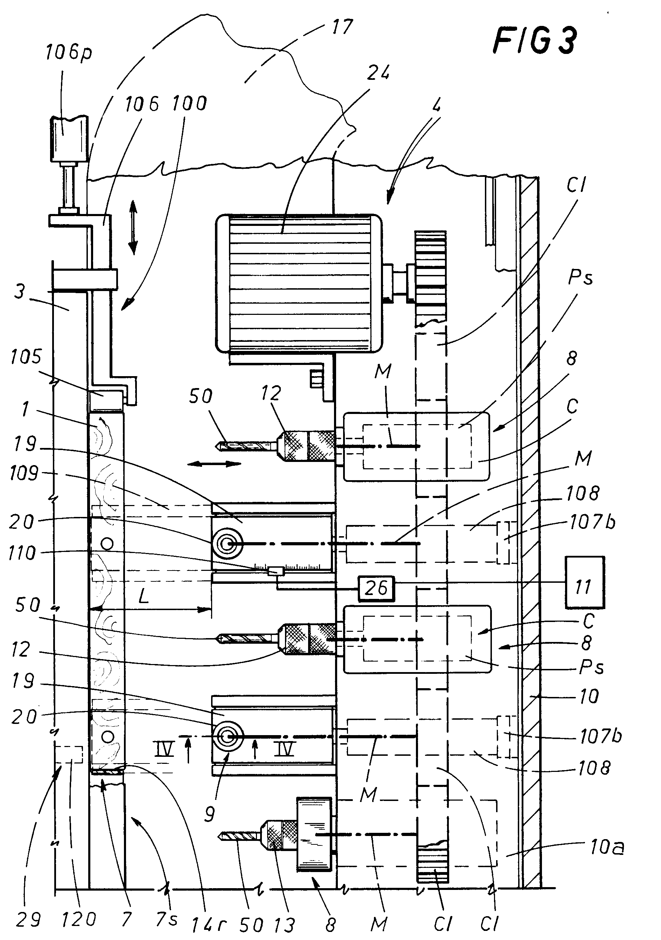

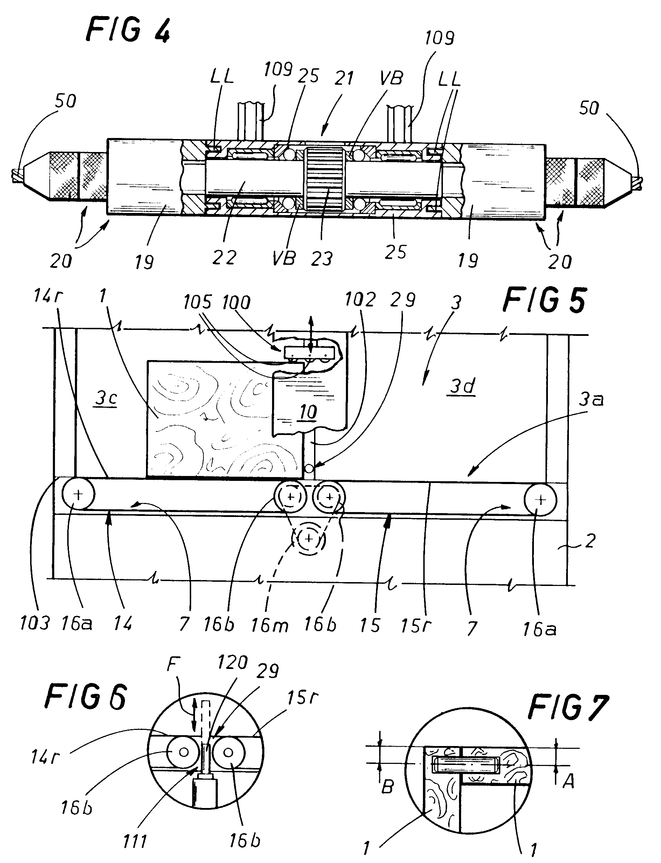

As discernible from fig 4, each mutually opposed pair of spindles 20 is associated, one on either side, with a housing 25 of which the dimensions as viewed along the perpendicular axis Z are significantly minimized; in effect, the housing 25 incorporates an independent borer transmission assembly 21 comprising a shaft 22 connected at each end to a relative spindle 20 and set in rotation by a central gear 23 coupled mechanically to a single drive unit 24 that provides the power for all rotating parts of the machining unit 4 (drive is transmitted to the various units through a train of gear pairs CI and shafts M indicated schematically in fig 3, being conventional in embodiment and therefore not strictly central to the invention). The shaft 22 is supported rotatably by sets of rolling bearings VB within the housing 25, which is associated rigidly in its turn with the turret 19, whilst each spindle 20 is connected rotatably to the corresponding end of the housing 25 by way of a labyrinth assembly LL.

In addition to the first and the second units 8 and 9 described thus far, the machining unit 4 might also comprise a router unit 51 installed at one end of the beam and coupled to the same drive unit 24.

Also associated with the edge boring units 9 will be reference means 26 (indicated schematically in fig 3) of which the function is to sense the displacement of the single spindle 20 along the perpendicular axis Z and return a relative signal to the control means 11; this same signal, indicating the "vertical" distance as measured by the reference means 26, is then used by the control means 11 to position the workpiece 1 on the longitudinal axis X in relation to the face boring units 8 so that two workpieces 1 bored one on the face and one on the edge can be matched up faultlessly by virtue of the fact that the corresponding centres A and B are positioned to coincide exactly (see fig 7 in particular). Such reference means 26 might consist in practice of an electronic system, typically a linear potentiometer 110 capable of measuring the travel L of the traversing spindle 20 and thereupon transmitting a proportional output signal to the control means 11, which proceed in their turn to move the workpiece 1 a corresponding distance along the longitudinal axis X.

As already intimated, the movements of the machining unit 4 and the positioning means 7 on the longitudinal and transverse axes X and Y are governed by the same control means 11, which will consist in a conventional numerical control unit programmable by the operator according to the type of workpiece 1 being machined.

The aforementioned stop and reference element 29 is embodied as a pin 120 located near the bottom edge 3a of the work table 3, adjacent to the supporting and positioning means 7s and 7, in a central position. The pin 120 might be disposed in either of two different configurations according to the type of work table 3 adopted for the machining centre: in the example of fig 5, the table 3 appears as two distinct parts 3c and 3d divided down the middle by a through slot 102 that extends parallel with the transverse axis Y; the pin 120 is located at the bottom end of the slot 102 and capable of movement parallel to the perpendicular axis Z between a non-operating lowered position, lying at a height below the working surface of the table 3, and a raised operating position in which the free end projects above the working surface of the table 3 in such a way as to place an obstacle in the path of a workpiece 1 advancing parallel with the longitudinal axis X. Fig 6 illustrates a different configuration of the pin 120 which would be adopted in event that the work table 3 is embodied as a single element; in this instance the pin 120 is interposed between the two belts 14 and 15, or more exactly, accommodated within a space 111 between the adjacent ends of the belts and capable thus of movement parallel with the transverse axis Y (see arrow F, fig 6) between the lowered and the raised position in such a manner respectively as to allow or to prevent the passage of a workpiece 1 advancing parallel with the longitudinal axis X.

In either instance, the pin 120 establishes the point of origin (in effect, zero on the X and Y axes) from which the control means 11 will measure and compute positions.

The waste generated by machining is removed by way of an extractor hood 17 (indicated in fig 3) encompassing the machining unit 4 in its entirety and supported by relative slide ways associated permanently with the selfsame unit, though not illustrated in the drawings.

Other parts incorporated into the machining centre, visible in fig 1, include means 30 associated with the fixed beam 10 and serving to clamp the workpiece 1 to the table 3; such means 30 consist in a plurality of hold-down elements distributed uniformly along the beam 10 and capable of movement in the direction of the perpendicular axis Z.

The manner in which boring operations are performed on a workpiece 1 by the wood machining centre will now be described.

The operator programs the control means 11 according to the type of operations to be executed, and equips the machining unit 4 with the tools 50 appropriate for the purpose.

Having set up the equipment, the operator proceeds to position a workpiece 1 on the work table 3 with the bottom edge 1a resting on the horizontal fence 103, whereupon the rolling fence 105 is brought down onto the top edge 1b.

At this juncture the belts 14 and 15 are activated to advance the workpiece 1 along the longitudinal axis X, flush with the work table 3, and the pin 120 is raised to the operating position. As the workpiece 1 locates against the pin 120, the belts 14 and 15 are stopped momentarily so that the control means 11 can set the positional value of the origin established by the pin.

This done, the pin 120 is lowered and the workpiece 1 then advanced into position (again by means of the belts 14 and 15) in readiness for machining. With the workpiece in place, the control means 11 will position the machining unit 4 on the transverse axis Y and then cause the spindles 12 and 13 of the face boring unit 8 to descend as one, parallel with the perpendicular axis Z, in the number and at the positions programmed.

The machining program may also comprise horizontal sinkings, in which case the workpiece 1 is released and advanced along the work table 3 in the appropriate direction, whilst the turrets 19 of the second unit 9 are positioned so as to bring the horizontal tools 50 into alignment with the edge of the workpiece 1. The descent of the turrets is accompanied by the descent of the hold-down elements 30, which will combine with the rolling fence 105 to maintain the workpiece 1 in position while continuing to allow its translation parallel with the longitudinal axis X.

Horizontal holes are bored by feeding the workpiece 1 along the table 3 and against the tools 50 rotating in the stationary turrets 19: accordingly, the ends of the hold-down elements 30 in contact with the surface of the work will incorporate rollers (not illustrated) so that the workpiece 1 can be restrained securely and translated with precision at one and the same time.

The objects stated at the outset are realized in a machining centre as described and illustrated, thanks to a simple and compact structure which is nonetheless able to handle panels of appreciable dimensions. The "drawing board" type layout allows almost all sides of the piece to be machined, and yet the machining unit proper is compassed within a small space and totally enclosed, thereby achieving a high level of operator safety. In particular, the entire machining unit is arranged in such a way that the operator addresses only the backward-facing and static part, i.e. in such a way that the fixed beam, the enclosures (the slide way and extractor hood) and the work clamps combine to establish a complete barrier between the operator and the tools engaging the work; naturally this protective aspect of the design extends also to the removal of dust generated by machining.

The use of numerical control brings the advantages of increased speed and greater accuracy in machining. The particular arrangement of the horizontal turrets, with their bearing assemblies, and their rotating and fixed parts connected by way of labyrinth seals (utilized in preference to normal seals by reason of the reduced dimensions obtainable), is instrumental in minimizing the proportions of the boring units with respect to the perpendicular axis, so that the relative spindles can locate the edge of the work without encroaching on the table and the table itself therefore need offer no special gaps or openings in which to accommodate the spindles temporarily when brought into operation.

## Claims

1. A machining centre for boring operations as performed in particular on workpieces (1) of wood, of the type comprising a bed (2) with a work table (3) referable to a longitudinal axis (X) and a transverse axis (Y), on which to support a workpiece (1) for machining, and at least one machining unit (4) capable of movement and adjustable for position close to the table (3), characterized
- in that the work table (3) is inclined toward the vertical, relative to a horizontal reference plane (P) on which the bed (2) has its stance, and affords at least one stop and reference element (29) located near to the bottom edge (3a), projecting from the surface offered to the workpiece and functioning as a point of origin to which machining operations are referred;
- in that it comprises means (7s, 7) of supporting and positioning the workpiece (1), by which the workpiece is engaged directly and translated parallel with the longitudinal axis (X) across the work table (3), in either direction, according to the type of machining operations to be performed on the workpiece;
- in that the machining unit (4) extends along the transverse axis (Y) and is composed at least of face boring units (8) operating along a relative axis (Z) perpendicular to the work table (3), also edge boring units (9) operating parallel with the longitudinal axis (X), all of which carried by a beam (10) located above and facing the work table (3) and associated rigidly with the bed (2), in such a manner that the entire unit (4) is capable of movement and adjustable for position along the transverse axis (Y); and,
- in that it comprises means (11) by which to control the movement of the machining unit (4) and of the positioning means (7) along the longitudinal and transverse axes (X, Y), automatically, according to the type of machining operations that can be performed on the workpiece (1).

2. A machining centre as in claim 1, wherein face boring units (8) comprise at least one first set of power driven spindles (12) ordered along the transverse axis (Y), also a second set of power driven spindles (13) ordered along the longitudinal axis (X) in crossover formation with the first set of spindles (13), each such set of spindles (12, 13) serving to perform a particular type of operation on the workpiece (1) and capable of movement independently in the direction of the perpendicular axis (Z).

3. A machining centre as in claim 1, wherein edge boring units (9) consist in a plurality of sub-units arranged in alternation with the spindles of the face boring units (8), each comprising a turret (19) equipped with at least two mutually opposed spindles (20) capable of movement along the perpendicular axis (Z) in relation to the beam (10) and positionable thus in relation to the work table (3).

4. A machining centre as in claim 3, wherein the mutually opposed spindles (20) of each pair are associated one on either side with a housing (25) secured rigidly to the turret (19), exhibiting compact dimensions in the direction of the perpendicular axis (Z) and designed to incorporate an independent boring unit transmission assembly (21) that comprises a shaft (22) connected at each end to a relative spindle (20), supported within the housing (25) by sets of rolling bearings (VB) and set in rotation thus by a central gear (23) coupled mechanically to a drive unit (24), and at least two labyrinth assemblies (LL) by way of which the single respective spindles (20) of the mutually opposed pair are connected rotatably to the corresponding ends of the housing (25).

5. A machining centre as in claim 1, wherein positioning means (7) by which the workpiece (1) is translated parallel with the longitudinal axis (X) consist in a pair of belts (14, 15) operating in tandem, each looped around corresponding pulleys (16a, 16b) of which at least one is power driven, and disposed with respective active branches (14r, 15r) occupying a common plane that coincides with the bottom edge (3a) of the work table (3), thereby creating a surface on which the workpiece (1) can be made to rest supported along one edge (1a) and conveyed parallel with the longitudinal axis (X) in either direction.

6. A machining centre as in claim 5, wherein the positioning means (7) operate in conjunction with restraint means (100) disposed facing the belts (14, 15), capable of movement in either direction along the transverse axis (Y), and designed to interact with an edge (1b) of the workpiece (1) opposite from the edge resting on the belts (14, 15) when the workpiece is in movement along the longitudinal axis (X).

7. A machining centre as in claim 5, wherein the positioning means (7) are accommodated internally of a horizontal fence (103), coinciding with the bottom edge (3a) of the work table (3) and affording means (7s) by which to support the workpiece (1), of which the top face affords a longitudinal opening (104) so as to allow contact between the active branches (14r, 15r) of the belts (14, 15) and the bottom edge (1a) of a workpiece (1) resting on the fence (103).

8. A machining centre as in claim 1, further comprising reference means (26) associated with the edge boring unit (9), of which the function is to measure the displacement of a spindle (20) along the perpendicular axis (Z) and to generate a corresponding signal such as can be used by the control means (11) to position the workpiece (1) at a predetermined distance on the longitudinal axis (X) in relation to the face boring units (8) commensurate with the perpendicular distance sensed by the reference means (26).

9. A machining centre as in claim 1, wherein the stop and reference element (29) consists in a pin (120) located close to the bottom edge (3a) of the work table (3) at a point substantially coinciding with the supporting and positioning means (7s, 7), and rendered capable of movement parallel with the transverse axis (Y) between a non-operating lowered position, with the free end disposed at a height below the surface afforded by the supporting and positioning means (7s, 7), and a raised operating position in which the free end projects above the surface afforded by the supporting and positioning means (7s, 7), in such a way as to place an obstacle in the path of a workpiece (1) advancing parallel with the longitudinal axis (X) and establish a point of origin for the computation of positions by the control means (11).

10. A machining centre as in claim 1, comprising a work table (3) divided centrally into two distinct parts (3c, 3d) by a through slot (102) extending parallel with the transverse axis (Y), wherein the stop and reference element (29) consists in a pin (120) located toward the bottom end of the slot (102) and capable of movement in the direction of the perpendicular axis (Z) between a non-operating lowered position, with the free end disposed at a height below the surface of the work table (3), and a raised operating position in which the free end projects above the surface of the work table (3) in such a way as to place an obstacle in the path of a workpiece (1) advancing parallel with the longitudinal axis (X) and establish a point of origin for the computation of positions by the control means (11).

11. A machining centre as in claim 1, further comprising an extractor hood (17), encompassing the machining unit (4) in its entirety and serving to remove the waste generated by machining operations.

12. A machining centre as in claim 1, further comprising means (30) associated with the fixed beam (10) and serving to clamp the workpiece (1) to the table (3), consisting in a plurality of hold-down elements ordered uniformly along the beam (10) and capable of movement parallel with the perpendicular axis (Z).
